# EUROPÄISCHE PATENTSCHRIFT

(11) **EP 3 012 696 B1**
(45) Veröffentlichungstag und Bekanntmachung des Hinweises auf die Patenterteilung: **25.12.2019**
(21) Anmeldenummer: 15187702.4
(22) Anmeldetag: 30.09.2015
(51) Int. Cl.: G05B 19/042, G08C 23/04

(54) **VERFAHREN ZUM VERBINDEN EINES FELDGERÄTS MIT EINER BEDIENEINHEIT**
METHOD FOR CONNECTING A FIELD DEVICE WITH AN OPERATING UNIT
PROCÉDÉ DE LIAISON D'UN APPAREIL DE TERRAIN ET D'UNE UNITÉ DE COMMANDE

(30) Priorität: 24.10.2014 DE 102014115514
(43) Veröffentlichungstag der Anmeldung: 27.04.2016
(73) Patentinhaber: Krohne Messtechnik GmbH, 47058 Duisburg (DE)
(72) Erfinder: Brockhaus, Helmut, 46145 Oberhausen (DE); Lemke, Lars, 47269 Duisburg (DE)
(74) Vertreter: Gesthuysen Patent- und Rechtsanwälte

(56) Entgegenhaltungen:
- EP-A1- 1 486 841
- EP-A1- 2 597 865
- EP-A1- 2 713 228
- WO-A1-02/056536
- DE-A1-102012 112 160
- US-A1- 2013 058 658

## Beschreibung

Die Erfindung betrifft ein Verfahren zum Verbinden eines Feldgeräts mit einer Bedieneinheit. Weiterhin bezieht sich die Erfindung auf ein Feldgerät.

In der Prozessautomatisierung werden Prozesse oder Medien durch Feldgeräte in Form von Messgeräten (Sensoren) überwacht bzw. in Form von Stellgliedern (Aktoren) beeinflusst. Diese Feldgeräte sind oft mittel oder unmittelbar mit Leitwarten oder Prozessleitsystemen verbunden.

Um in der Prozessanlage direkt auf ein Feldgerät zugreifen zu können, werden oft sogenannte Handhelds als mobile Bedieneinheiten verwendet, siehe z. B. die DE 10 2005 041 862 A1. Eine Statusanzeige eines Feldgeräts, das ausgelöst durch ein Funksignal erfolgt, besteht beispielsweise in einem Blinken oder in einem akustischen Signal, siehe DE 103 26 627 A1. Dabei kann es unter Verwendung von entsprechenden Passwörtern und zugeordneten Rechten auch vorgesehen sein, dass der Zugriff nur auf bestimmte Parameter des Feldgeräts erlaubt ist, siehe z. B. die DE 10 2012 109 348 A1.

Die Verbindung zwischen Bedieneinheit und Feldgerät erfolgt beispielsweise für die Parametrierung, die Abfrage von Statusdaten oder für Diagnosezwecke. Allgemein wird über die Verbindung eine Kommunikation zwischen Bedieneinheit und Feldgerät realisiert.

Für die Kennung des Feldgeräts wird in Bezug auf Funknetze in der DE 10 2004 055 308 A1 vorgeschlagen, dass der Gerätename, eine TAG-Nummer oder eine Seriennummer verwendet wird. Die TAG-Nummer bezeichnet dabei auch die Position des Feldgeräts innerhalb der Prozessanlage.

Eine Möglichkeit der Kommunikation zwischen Geräten ist Bluetooth. Dabei wird ein erster Verbindungsaufbau zwischen zwei Bluetooth-Geräten als Pairing bezeichnet. Aus Kenndaten, die die Geräte einander übermitteln, resultiert ein Verbindungsschlüssel, der es erlaubt, folgende Verbindungen automatisch stattfindet zu lassen.

Bluetooth-Geräte melden sich, nachdem sie in den aktiven Zustand versetzt worden sind, mit einer MAC-Adresse (Media-Access-Control-Adresse) und lauschen im Bereitschafts-Modus automatisch nach Nachrichten. Die Geräte sind dabei mit einem Identifizierungsnamen bezeichnet. Um eine Verbindung zu autorisieren, ist es in der Regel erforderlich, ein dem jeweiligen Gerät zugeordneten Passkey einzugeben. Beispiele, wie mit diesem Passkey oder Passwort zu verfahren ist, lässt sich beispielsweise der WO 02/056536 A1 entnehmen.

Problematisch sind die Fälle, wenn die Feldgeräte an für einen Benutzer in der Prozessanlage ungünstigen oder nur sehr schwer erreichbaren Stellen angebracht sind. Zu denken sei dabei an Messgeräte auf hohen Tanks oder an Ventile innerhalb einer Anordnung von Rohren usw. Feldgeräte können teilweise auch direkt unter der Decke oder in Schächten angebracht sein. Auch können die Umgebungsbedingungen, wenn das Feldgerät z. B. direkt im Prozess befindlich ist, für einen Bedienperson eher unangenehm sein. Es handelt sich also insbesondere um die Fälle, in denen nicht oder nur sehr aufwändig direkter Blickkontakt mit dem Feldgerät hergestellt werden kann. Befinden sich vor allem mehrere Bluetooth-Feldgeräte unter solchen Bedingungen nah beieinander, so kann es mitunter schwierig sein, zu erkennen, welches Feldgerät adressiert ist bzw. welcher Identifizierungsname zu welchem Gerät gehört.

Der Erfindung liegt daher die Aufgabe zugrunde, ein Verfahren - und ein hierfür geeignetes Feldgerät - vorzuschlagen, über das eine Verbindung zwischen einem Feldgerät und einer Bedieneinheit auch dann realisiert wird, wenn das Feldgerät an einer schwer zugänglichen Stelle angebracht ist.

Das erfindungsgemäße Verfahren, bei dem die zuvor hergeleitete und aufgezeigte Aufgabe gelöst ist, ist zunächst und im Wesentlichen dadurch gekennzeichnet, dass durch die Bedieneinheit mindestens ein Anfragesignal an das Feldgerät übermittelt wird und dass durch das Feldgerät in Reaktion auf das Anfragesignal mindestens ein Antwortsignal erzeugt wird, indem das Feldgerät eine blinkende Anzeige und/oder eine Farbänderung einer Anzeige und/oder ein akustisches Signal und/oder eine Änderung eines akustischen Signals erzeugt.

Durch die blinkende Anzeige bzw. über die Farbänderung der Anzeige ist eine weite Erkennbarkeit gegeben. Durch das akustische Signal bzw. durch die Änderung eines akustischen Signals (z. B. Tonhöhe, Lautstärke, Klang, Tonfolge, Frequenz usw.) lassen sich ebenfalls weitere Abstände überbrücken.

Weiterhin zeigt das Gerät an, dass es das Anfragesignal empfangen hat. Zudem wird das Passwort oder wird wenigstens ein Teil des Passworts - also des passkeys - übermittelt, nach dessen Eingabe der Bedieneinheit der Zugriff auf das Feldgerät erlaubt wird. Optional wird zusätzlich der Identifizierungsname des Feldgeräts übermittelt.

Das Anfragesignal ist in einer Ausgestaltung ein direktes Signal zum Einleiten einer Verbindung und ist in einer alternativen Ausgestaltung die aktivierte Möglichkeit zu kommunizieren. So wird in einer Ausgestaltung eine Bluetooth-Verbindung eingeleitet, indem die entsprechende Bluetooth-Schnittstelle der Bedieneinheit aktiviert wird und das Feldgerät durch die Nähe der Bedieneinheit erkennt, dass eine Verbindung erwünscht wird. Das Anfragesignal ist daher in dieser Ausgestaltung gegeben durch die Möglichkeit zur Kommunikation und durch die erforderliche Mindestnähe zwischen Bedieneinheit und Feldgerät.

In einer Ausgestaltung ist vorgesehen, dass das Anfragesignal durch das Feldgerät über eine Schnittstelle für eine drahtlose Kommunikation empfangen wird. In einer Ausgestaltung handelt es sich insbesondere um eine Bluetooth-Schnittstelle.

Gemäß einer Ausgestaltung wird die Anzeige durch das Feldgerät über eine Ausgabeeinheit erzeugt. Dabei handelt es sich in einer Ausgestaltung bei der Ausgabeeinheit um eine Anzeigeeinheit und vorzugsweise um ein Display, das auch der direkten Bedienung des Feldgeräts - z. B. für die Darstellung von Messwerten - dient. Alternativ handelt es sich um eine optische Einheit, die blinkende bzw. farbliche Signale im optisch wahrnehmbaren Spektralbereich erzeugt.

Gemäß einer weiteren Ausgestaltung wird das akustische Signal über eine Ausgabeeinheit ausgegeben, die im Wesentlichen in der Art eines Lautsprechers ausgestaltet ist.

Das akustische Signal liegt dabei in einer Variante in dem vom menschlichen Gehör wahrnehmbaren Bereich und liegt in einer alternativen Variante in dem vom menschlichen Gehör unhörbaren Frequenzbereich. In einer weiteren Variante liegt das Signal oder liegen die Signale jeweils teilweise in den Frequenzbereichen.

Erfindungsgemäß werden in dem Antwortsignal Daten für das Verbinden des Feldgeräts mit der Bedieneinheit übertragen. In einer Variante handelt es sich um Teile eines Passworts (oder passkeys), das den Zugriff auf das Feldgerät erlaubt.

Der Passkey oder der übertragene Teil des Passkey wird in einer Ausgestaltung von dem Feldgerät, z. B. unter Anwendung von Zufallszahlen, erzeugt. Der Passkey wird daher in einer Ausgestaltung vollständig vom Feldgerät im Antwortsignal übertragen und wird in einer alternativen Ausgestaltung nur teilweise übermittelt, wobei auf der Seite der Bedieneinheit dieser Teil mit einem vorbekannten Teil zum Passkey kombiniert wird. In einer Ausgestaltung werden insbesondere mehrere Antwortsignale vom Feldgerät erzeugt, um unterschiedliche Daten bzw. Informationen zu übermitteln.

In einer Ausgestaltung werden die vorgenannten Daten für das Verbinden durch die Verwendung des Morse-Codes oder eines ähnlichen Codes - durch das Blinken und/oder durch den Wechsel der Farbe und/oder über das akustische Signal bzw. die akustischen Signale - übertragen. Bei dem ähnlichen Code kann es sich um einen proprietären Code handeln, der auf weniger Elemente als der gesamte Morse-Code reduziert ist.

In einer Ausgestaltung verwendet das Feldgerät eine dem Feldgerät zuweisbare Bezeichnung als Identifizierungsnamen bzw. als ID (für Identifikator oder Kennung). Dabei handelt es sich in einer Ausgestaltung um eine TAG-Nummer, die das Gerät und dessen Position oder beispielsweise dessen Funktion innerhalb der Prozessanlage beschreibt. Alternativ oder ergänzend wird eine Seriennummer und/oder eine Gerätebezeichnung des Feldgeräts als Identifizierungsnamen verwendet. Der Identifizierungsnamen wird dabei entweder werkseitig bei der Fertigung im Feldgerät hinterlegt oder dies erfolgt in der Prozessanlage selbst bzw. im Rahmen der Installierung des Feldgeräts in der Anlage.

Um zu verhindern, dass Unberechtigte auf das Feldgerät zugreifen, ist in einer Ausgestaltung vorgesehen, dass über die Bedieneinheit mindestens ein Passwort an das Feldgerät übermittelt wird. Dies kann als Teil des Anfragesignals geschehen. In einer alternativen Ausgestaltung geschieht dies unter Verwendung der Daten, die durch das Antwortsignal des Feldgeräts übertragen werden.

In einer Ausgestaltung ist das Passwort zwingend erforderlich, damit das Feldgerät das Antwortsignal erzeugt und/oder dass das Feldgerät die Verbindung mit der Bedieneinheit erlaubt.

In einer Ausgestaltung wird die Verbindung zwischen dem Feldgerät und der Bedieneinheit als Bluetooth-Verbindung - insbesondere unter Verwendung des Pairing - erzeugt. In dieser Ausgestaltung werden also zwei Bluetooth-Geräte miteinander verbunden.

Gemäß einer weiteren Lehre wird die obige Aufgabe durch ein Feldgerät gelöst, das zumindest dadurch gekennzeichnet ist, dass mindestens eine Schnittstelle für eine drahtlose Kommunikation vorhanden ist und dass mindestens eine Ausgabeeinheit vorhanden ist, wobei die Ausgabeeinheit eine blinkende Anzeige und/oder eine Farbänderung der Anzeige erlaubt und/oder ein akustisches Signal und/oder eine Änderung eines akustischen Signals erzeugt. In einer Ausgestaltung ist die Schnittstelle insbesondere eine Bluetooth-Schnittstelle. Die Ausgabeeinheit ist in einer Ausgestaltung insbesondere ein Display oder eine Projektionseinheit, die von dem Feldgerät für die Verbindung mit einer Bedieneinheit verwendet wird und die sich dadurch auszeichnet, dass ein Blinken oder eine Farbänderung möglich sind. Die Ausgabeeinheit ist alternativ oder ergänzend zumindest teilweise als Lautsprecher ausgestaltet.

In einer Ausgestaltung gibt das Feldgerät als Reaktion auf das Empfangen eines Anfragesignals - insbesondere von einer mobilen Bedieneinheit - über die Ausgabeeinheit mindestens ein Antwortsignal durch Blinken und/oder eine Farbänderung und/oder durch das Erzeugen eines akustischen Signals und/oder durch die Änderung eines akustischen Signals aus.

Die obigen Ausführungen bezüglich des Verfahrens gelten entsprechend auch für das Feldgerät bzw. werden durch dieses umgesetzt.

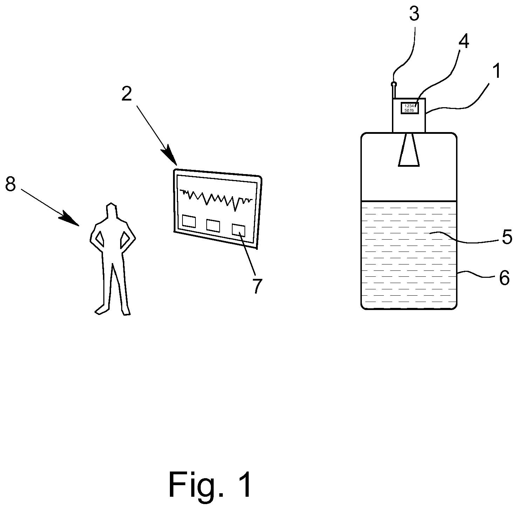

Im Einzelnen gibt es nun eine Vielzahl von Möglichkeiten, das erfindungsgemäße Verfahren und das erfindungsgemäße Feldgerät auszugestalten und weiterzubilden. Dazu wird verwiesen einerseits auf die den Patentansprüchen 1 und 9 nachgeordneten Patentansprüche, andererseits auf die folgende Beschreibung eines Ausführungsbeispiels in Verbindung mit der Zeichnung. In der Zeichnung zeigt
- Fig. 1: eine schematische Darstellung eines Teils einer Prozessanlage.

In der Fig. 1 wird schematisch dargestellt, wie in einer Prozessanlage eine Verbindung zwischen einem Feldgerät 1 und einer Bedieneinheit 2 hergestellt wird. Dies geschieht im gezeigten Beispiel über eine Bluetooth-Verbindung mittels des sogenannten Pairing.

Hierfür ist das Feldgerät 1 Bluetooth-fähig und verfügt über eine entsprechende Schnittstelle 3 für eine drahtlose Bluetooth-Verbindung. Weiterhin ist eine Ausgabeeinheit 4 - hier als direkter Bestandteil des Feldgeräts 1 und in Form einer Anzeigeeinheit - vorgesehen, die derartig angesteuert wird, so dass sich ein Blinken und eine Farbänderung der Anzeige ergeben. Damit lassen sich Daten und Informationen auch über weite Entfernungen übertragen bzw. auf der Empfängerseite erkennen.

Das Feldgerät 1 dient hier als Messgerät zur Bestimmung des Füllstands eines Mediums 5 in einem Behälter 6.

Bei der Bedieneinheit 2 handelt es sich beispielhaft um ein Tablett. In einer alternativen - jedoch nicht dargestellten - Variante handelt es sich um ein Handheld.

Um aus dem Blinken bzw. der Farbänderung der Anzeige des Feldgeräts 1 die übertragenen Daten leichter extrahieren zu können, verfügt die Bedieneinheit 2 hier über einen Sensor 7, der das Antwortsignal des Feldgeräts 1 empfängt und daraus die übertragenen Daten extrahiert. Alternativ geschieht dies über den Benutzer 8, der auch die Bedieneinheit 2 bedient, um damit den Kontakt mit dem Feldgerät 1 aufzubauen. In dem - hier nicht dargestellten - Fall, dass das Feldgerät ein akustisches Signal erzeugt, ist der Sensor entsprechend eine Art von Mikrofon.

Für die Herstellung einer Verbindung begibt sich der Benutzer 8 mit seiner Bedieneinheit 2 so nahe an das Feldgerät 1, dass eine Bluetooth-Verbindung erzeugt werden kann. Dies ist im Allgemeinen ein Abstand zwischen den Bluetooth-Geräten bis zu 10 m.

Dann erzeugt er ein Anfragesignal, indem er die Bedieneinheit 2 für die Bluetooth-Kommunikation aktiviert oder indem er aktiv an benachbarte Bluetooth-Geräte ein Anfragesignal absendet.

Daraufhin erzeugt das dargestellte Feldgerät 1 ein Antwortsignal über die Ausgabeeinheit 4, indem die Anzeige blinkt bzw. indem die Farbe der Anzeige wechselt.

In dem Antwortsignal wird über das Blinken bzw. den Farbwechsel der Passkey des Feldgeräts 1 übermittelt.

Der Benutzer 8 entnimmt dem Antwortsignal diese Information und übermittelt sie über die Bedieneinheit 2 an das Feldgerät 1, um die Verbindung zu autorisieren.

## Patentansprüche

1. Verfahren zum Verbinden eines Feldgeräts (1) mit einer Bedieneinheit (2), wobei über die Verbindung eine Kommunikation zwischen Bedieneinheit und Feldgerät realisiert wird, wobei durch die Bedieneinheit (2) mindestens ein Anfragesignal an das Feldgerät (1) übermittelt wird und wobei durch das Feldgerät (1) in Reaktion auf das Anfragesignal mindestens ein Antwortsignal erzeugt wird, indem das Feldgerät (1) eine blinkende Anzeige und/oder eine Farbänderung einer Anzeige und/oder ein akustisches Signal und/oder eine Änderung eines akustischen Signals erzeugt,
**dadurch gekennzeichnet,**
**dass** in dem Antwortsignal Daten für das Verbinden des Feldgeräts (1) mit der Bedieneinheit (2) übertragen werden, wobei es sich bei dem Antwortsignal um ein Passwort oder um Teile eines Passworts handelt, wobei das Passwort einen Zugriff auf das Feldgerät erlaubt, und dass durch die Bedieneinheit (2) das Passwort an das Feldgerät (1) übermittelt wird.

2. Verfahren nach Anspruch 1, **dadurch gekennzeichnet, dass** das Anfragesignal durch das Feldgerät (1) über eine Schnittstelle (3) für eine drahtlose Kommunikation empfangen wird, und dass die Anzeige und/oder das akustische Signal durch das Feldgerät (1) über eine Ausgabeeinheit (4) erzeugt wird.

3. Verfahren nach Anspruch 1 oder 2, **dadurch gekennzeichnet, dass** die Daten für das Verbinden durch die Verwendung des Morse-Codes übertragen werden.

4. Verfahren nach einem der Ansprüche 1 bis 3, **dadurch gekennzeichnet, dass** durch das Feldgerät (1) zusätzlich eine dem Feldgerät (1) zuweisbare Bezeichnung und/oder eine Seriennummer des Feldgeräts (1) als Identifizierungsnamen des Feldgeräts übermittelt wird.

5. Verfahren nach einem der Ansprüche 1 bis 4, **dadurch gekennzeichnet, dass** die Verbindung zwischen dem Feldgerät (1) und der Bedieneinheit (2) als Bluetooth-Verbindung - insbesondere unter Verwendung des Pairing - erzeugt wird.

## Claims

1. Method for connecting a field device (1) to an operating unit (2), wherein communication between the operating unit and the field device is implemented via the connection, wherein at least one query signal is transmitted to the field device (1) by the operating unit (2) and that at least one response signal is generated by the field device (1) as a reaction to the query signal, in that the field device (1) generates a blinking display and/or a change in color of a display and/or an acoustic signal and/or a change in an acoustic signal
**characterized in**
**that** data for connecting the field device (1) to the operating unit (2) is transmitted in the response signal, wherein the response signal is a password or parts of a password, wherein the password permits access to the field device, and that the password is transmitted to the field device (1) by the operating unit (2).

2. Method according to claim 1, **characterized in that** the query signal is received by the field device (1) via an interface (3) for wireless communication and that the display and/or the acoustic signal is/are generated by the field device (1) via an output device (4).

3. Method according to claim 1 or 2, **characterized in that** the data for the connection is transmitted using the Morse code.

4. Method according to any one of claims 1 to 3, **characterized in that** the field device transmits additionally a designation assignable to the field device (1) and/or a serial number of the field device (1) as names for identification of the field device.

5. Method according to any one of claims 1 to 4, **characterized in that** the connection between the field device (1) and the operating unit (2) is generated as a Bluetooth connection - in particular using pairing.

## Revendications

1. Procédé de connexion d'un appareil de terrain (1) à une unité de commande (2), la communication entre l'unité de commande et l'appareil de terrain étant réalisée via la connexion, au moins un signal de requête étant transmis à l'appareil de terrain (1) par l'unité de commande (2) et au moins un signal de réponse étant généré par l'appareil de terrain (1) en réaction au signal de requête, en ce que l'appareil de terrain (1) produit un affichage clignotant et/ou un changement de couleur d'un affichage et/ou un signal acoustique et/ou une variation d'un signal acoustique, **caractérisé en ce que**
des données sont transmises dans le signal de réponse pour la connexion de l'appareil de terrain (1) à l'unité de commande (2), le signal de réponse étant un mot de passe ou des parties d'un mot de passe, le mot de passe autorisant l'accès à l'appareil de terrain et **en ce que** le mot de passe est transmis à l'appareil de terrain (1) par l'unité de commande (2).

2. Procédé selon la revendication 1, **caractérisé en ce que** le signal de requête est reçu par l'appareil de terrain (1) via une interface (3) destinée à la communication sans fil, et **en ce que** l'affichage et/ou le signal acoustique est généré par l'appareil de terrain (1) via une unité de sortie (4).

3. Procédé selon la revendication 1 ou 2, **caractérisé en ce que** les données destinée à la connexion sont transmises à l'aide du code Morse.

4. Procédé selon l'une des revendications 1 à 3, **caractérisé en ce qu'**un nom et/ou un numéro de série de l'appareil de terrain (1), pouvant être attribués à l'appareil de terrain (1), sont en plus transmis par l'appareil de terrain (1) en tant que nom d'identification de l'appareil de terrain.

5. Procédé selon l'une des revendications 1 à 4, **caractérisé en ce que** la connexion entre l'appareil de terrain (1) et l'unité de commande (2) est générée en tant que connexion Bluetooth - notamment à l'aide du couplage.
